# FASCICULE DE BREVET EUROPEEN

(11) **EP 1 674 765 B1**
(45) Date de publication et mention de la délivrance du brevet: **13.02.2008**
(21) Numéro de dépôt: 05301030.2
(22) Date de dépôt: 08.12.2005
(51) Int. Cl.: F16H 57/04, F16H 61/00

(54) **Système d'alimentation en fluide d'un mécanisme à commande hydraulique**
Vorrichtung zum Zuführen eines Fluids für einen Mechanismus mit hydraulischer Steuerung
Fluid supply system for a mecanism with a hydraulic control

(30) Priorité: 23.12.2004 FR 0413850
(43) Date de publication de la demande: 28.06.2006
(73) Titulaire: RENAULT S.A.S., 92100 Boulogne Billancourt (FR)
(72) Inventeur: Fournier, Vincent, 92300, LEVALLOIS-PERRET (FR); Favennec, Gwennaël, 75012, PARIS (FR); Obert, Jacques, 92370, CHAVILLE (FR)
(74) Mandataire: Rougemont, Bernard

(56) Documents cités:
- EP-A- 1 471 288
- US-A- 4 751 858
- US-A- 5 347 886

## Description

L'invention a pour objet un système d'alimentation en fluide d'au moins un mécanisme à commande hydraulique, en particulier une boîte de vitesses à embrayage humide.

Le système hydraulique d'une boîte de vitesses, en particulier à double embrayage humide, doit remplir différentes fonctions, en particulier :
- réguler la pression de ligne du système hydraulique ;
- alimenter les chambres d'actionnement des vérins des embrayages ;
- assurer la lubrification sous pression de l'ensemble du mécanisme, en particulier des divers éléments de la boîte de vitesses tels que roulements, fourchettes, baladeurs ...
- alimenter les chambres de compensation de pression du double embrayage et assurer la lubrification des disques de celui-ci.

En outre, dans le cas d'une boîte de vitesses avec actionnement hydraulique des éléments commandant le passage des vitesses tels que fourchettes et baladeurs, le système hydraulique doit également assurer cette fonction et doit être sécurisé de façon qu'il ne soit pas possible d'engager simultanément deux vitesses reliées au même embrayage.

Le système hydraulique peut, d'ailleurs, être simplifié si l'actionnement du passage de vitesses est assuré par un dispositif électromécanique, indépendant du système hydraulique.

Pour assurer ces différentes fonctions, on connaît des systèmes de type boîte automatique, avec un actionnement entièrement hydraulique qui ne nécessite pas un pilotage du débit de lubrification.

En revanche, dans le cas d'une boîte de vitesses, en particulier à double embrayage, comprenant un actionnement hydraulique des passages de vitesses, le débit de lubrification doit être variable et piloté suivant les points de fonctionnement. En outre, un tel système nécessite différents niveaux de pression pour satisfaire simultanément des besoins d'actionnement distincts et indépendants pour l'embrayage et le passage des vitesses.

Dans les solutions connues jusqu'à présent, avec un actionnement hydraulique du passage de vitesses, il est donc nécessaire d'assurer la sécurisation de l'engagement des vitesses et la gestion des modes dégradés par le système hydraulique.

En outre, il est nécessaire de refroidir l'huile en faisant passer au moins une partie de celle-ci dans un échangeur de chaleur et le débit de lubrification doit, normalement, être dissocié du débit de refroidissement dans l'échangeur. Il résulte que l'échangeur et les moyens de circulation de l'huile doivent être capables de refroidir le circuit dans des situations de dissipation maximale d'énergie dans la transmission. Un tel dispositif est donc surdimensionné pour les cas habituels de fonctionnement, ce qui nuit au rendement de l'ensemble de la transmission.

Par ailleurs, dans les dispositions connues jusqu'à présent, les moyens employés, tels que des électrovannes, pour commander la régulation de la pression et du débit des fluides, sont alimentées par une pression de ligne secondaire distincte de la pression de ligne du système hydraulique. De plus, cette pression de ligne secondaire doit être régulée par des moyens spécifiques et il est possible que le débit pompe soit insuffisant pour l'alimentation de tous les circuits.

Toutes ces exigences conduisent à des systèmes d'alimentation assez complexes et onéreux, avec des réglages parfois difficiles.

Le document US-A-4 751 858, par exemple, décrit un dispositif de contrôle de l'alimentation en lubrifiant d'une transmission automatique de véhicule comportant un convertisseur de couple et des mécanismes de changement du rapport de transmission, en fonction des instructions données par un calculateur.

Celui-ci contrôle l'alimentation en huile des divers organes au moyen d'un circuit hydraulique assez complexe, comportant notamment une vanne primaire de régulation de la pression de ligne et une vanne secondaire de régulation du débit de lubrification des différents organes, sur lesquelles est appliquée une pression de contrôle déterminée par une valve proportionnelle électromagnétique, en fonction de la vitesse du véhicule.

Cette valve secondaire de lubrification est branchée en dérivation sur le circuit d'alimentation du convertisseur de couple, une valve manuelle permettant de régler l'alimentation des circuits de passage des vitesses.

L'invention a pour objet un système d'alimentation hydraulique moins complexe que les systèmes connus permettant d'assurer toutes les fonctions nécessaires par des moyens particulièrement simples et économiques faisant appel à un nombre réduit de circuits et de vannes de régulation et permettant, en outre, un réglage fin du débit de lubrification.
Un tel système d'alimentation est du type comportant une conduite principale alimentée sous une pression de ligne par au moins une pompe, une première vanne de régulation de la pression de ligne ayant au moins une entrée branchée en dérivation sur la conduite principale et au moins une sortie débouchant sur une conduite secondaire de lubrification, un premier moyen de pilotage alimenté en fluide à partir de la conduite principale et générant une pression réglable de commande de la première vanne de régulation de pression, au moins une seconde vanne de régulation d'un débit de lubrification ayant au moins une entrée branchée sur ladite conduite secondaire et au moins une sortie débouchant sur au moins un circuit de lubrification du mécanisme, un second moyen de pilotage alimenté en fluide à partir de la conduite principale et générant une pression réglable de commande de la seconde vanne de régulation du débit de lubrification et au moins un circuit d'actionnement du mécanisme alimenté en fluide à partir de la conduite principale par l'intermédiaire d'un moyen réglable de commande du mécanisme.

Conformément à l'invention, la seconde vanne de régulation du débit de lubrification est une vanne à tiroirs dont la position est réglée en fonction d'une pression de commande délivrée par le second moyen de pilotage (7), entre une position de fermeture complète du circuit de lubrification (6) et une position d'ouverture complète de la vanne (5) avec un débit maximal de lubrification.

De préférence, chaque moyen de pilotage est une électrovanne formant un diviseur de pression variable avec une entrée d'alimentation branchée sur la conduite principale par l'intermédiaire d'un orifice calibré et une sortie de commande de la vanne de régulation correspondante.

De façon particulièrement avantageuse, la première vanne de régulation de la pression de ligne est une vanne à tiroirs dont la position est réglée par le premier moyen de pilotage, entre une position de fermeture complète avec une pression de ligne maximale dans la conduite principale et une position d'ouverture complète de la vanne avec une pression de ligne minimale.

Dans un mode de réalisation préférentiel, la première de vanne de régulation de pression est une vanne à tiroirs ayant deux sorties, respectivement une sortie prioritaire reliée à au moins une entrée de la seconde vanne de lubrification par une première conduite secondaire d'alimentation du circuit de lubrification et une seconde sortie de retour au réservoir d'une partie du surplus d'huile par une seconde conduite secondaire et elle se déplace, en fonction d'une pression de commande, entre deux positions, respectivement de fermeture complète et d'ouverture complète des deux sorties, en passant par une position intermédiaire d'ouverture de la première sortie prioritaire reliée à la vanne de lubrification, avec fermeture de la seconde sortie de retour au réservoir.

De même, la seconde vanne de lubrification comporte des première et deuxième sorties débouchant chacune dans un circuit de lubrification du mécanisme, respectivement un premier circuit qui est alimenté progressivement par la première sortie par déplacement de la vanne entre une position extrême de fermeture complète et une position centrale, et un second circuit qui est alimenté progressivement par la deuxième sortie par déplacement de la vanne entre ladite position centrale et une position extrême d'ouverture complète.

De façon particulièrement avantageuse, le système comporte un moyen de refroidissement d'au moins une partie du fluide de lubrification, constitué d'un échangeur de chaleur. Dans le cas de deux circuits de lubrification, l'échangeur de chaleur est avantageusement monté entre les deux circuits, avec une entrée branchée en dérivation sur le premier circuit de lubrification et une sortie reliée au second circuit pour l'alimentation de ce dernier en fluide refroidi.

Selon une autre caractéristique préférentielle, chaque moyen de pilotage d'une vanne de régulation est une électrovanne branchée en dérivation sur un circuit de pilotage alimenté par la conduite principale, pour le réglage de la pression appliquée sur une entrée de pilotage de la vanne en fonction d'un signal électrique de consigne.

D'autres caractéristiques avantageuses de l'invention apparaîtront dans la description qui va suivre d'un mode réalisation préférentiel, décrit à titre d'exemple non limitatif, en référence aux dessins annexés.
La figure 1 est un schéma de l'ensemble d'un système d'alimentation en fluide selon l'invention.
La figure 2 est un diagramme indiquant, pour différents niveaux de pression de ligne, la variation du débit de lubrification en fonction du courant de commande de l'électrovanne de pilotage.
La figure 3 est une vue de détail d'une vanne à tiroirs avec crans en V.
La figure 4 montre une variante de la vanne avec crans en V.

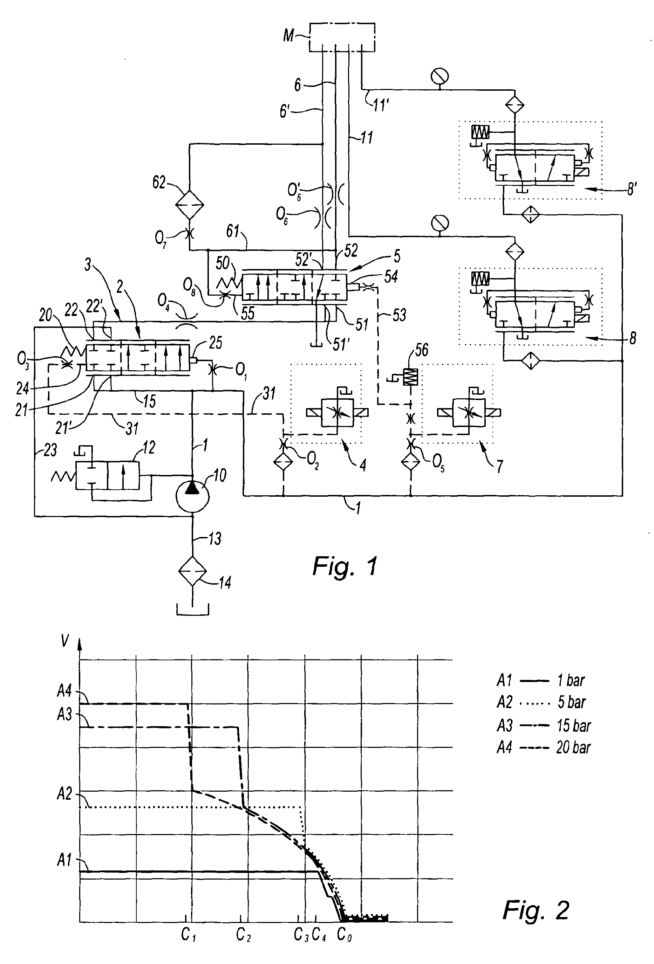

Sur la figure 1, on a représenté schématiquement l'ensemble du système hydraulique, d'alimentation d'un mécanisme M tel qu'une boîte de vitesses à double embrayage humide, comportant essentiellement deux circuits d'actionnement 11, 11' alimentés à partir d'une conduite principale 1, chacun par l'intermédiaire d'une électrovanne 8, 8' qui régule, en fonction d'un courant électrique de commande, la pression dans la conduite 11, 11' reliée à la chambre d'actionnement de l'embrayage correspondant.

La conduite principale 1 est elle-même alimentée par une pompe à huile 10 dont la pression de sortie, appelée pression de ligne, est régulée par une première vanne de régulation de pression 2 sécurisée par un clapet de sécurité 12.

La première vanne de régulation de pression 2 est branchée en dérivation, par une conduite 15, sur la conduite principale d'alimentation 1 et alimente une conduite secondaire 3 d'évacuation du surplus d'huile vers un circuit 6 de lubrification du mécanisme, dont le débit est régulé par une seconde vanne de régulation 5.

Dans le mode de réalisation préférentiel représenté sur la figure 1, la première vanne de régulation de pression 2 est une vanne à tiroirs comportant deux entrées 21, 21' alimentées par la conduite de dérivation 15 et deux sorties 22, 22' qui, selon la position de la vanne à tiroirs 2, peuvent être mises en communication chacune avec l'une des deux entrées 21, 21', respectivement une première sortie 22 qui évacue le surplus d'huile en priorité vers la conduite secondaire 3 d'alimentation du circuit de lubrification 6 et une seconde sortie 22' qui, en seconde priorité, oriente une partie du surplus d'huile vers une conduite 23 de retour à l'aspiration pompe rejoignant la conduite 13 d'aspiration d'huile dans le réservoir, en amont de la pompe 10 et en aval d'un filtre 14.

Sur la figure 1, la vanne de régulation 2 a été représentée dans sa position de fermeture, les tiroirs étant repoussé vers la droite par un organe de rappel élastique 20.

La pression de ligne est appliquée du côté droit sur une entrée 25 alimentée en dérivation à partir de la conduite principale 1, le débit étant réglé par un orifice calibré O₁. Cette pression est équilibrée par l'organe de rappel 20 agissant sur le côté gauche, dans le même sens qu'une pression de commande appliquée sur une entrée de pilotage 24 alimentée par une conduite 31 branchée en dérivation sur la conduite principale 1 et sous une pression réglée par une électrovanne de pilotage 4 formant un diviseur de pression avec un orifice calibré O₂ disposé en amont sur la conduite 31.

L'électrovanne de pilotage 4 permet, en fonction d'un courant de consigne, de régler la pression de commande appliquée sur l'entrée 24, de façon à maintenir à une valeur de consigne la pression dans la conduite principale 1.

En cas de surpression dans la conduite principale 1 et, par conséquent, à l'entrée 25 de la vanne 2, les tiroirs se déplacent vers la gauche et ouvrent progressivement la seconde sortie 22', de façon à renvoyer un surplus d'huile au réservoir par la conduite de retour 23.

Un orifice calibré O₄ placé sur la conduite secondaire de lubrification 3 permet de limiter la pression en amont de la vanne de lubrification 5.

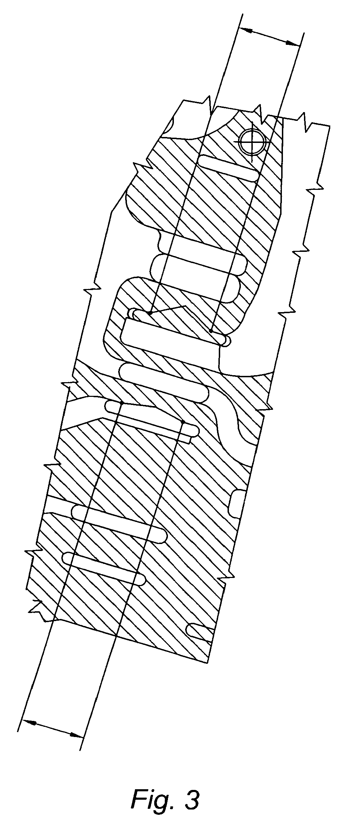

II est à noter que la pression de commande de la vanne de régulation 2 générée par le diviseur de pression constitué par l'électrovanne de pilotage 4 n'a pas besoin d'être filtrée par un accumulateur si la vanne 2 comporte, de façon connue, un cran en V de la façon représentée, par exemple, sur la figure 3, ce qui garantit une section de découvrement plus progressive des tiroirs en fonction du déplacement axial.

La vanne de lubrification 5 qui est également du type à tiroirs, comporte, de préférence, deux entrées 51, 51' pouvant être mises en communication par des conduits ménagés dans le tiroir, avec deux sorties, respectivement 52, 52'.

La vanne 5 est représentée en position ouverte sur la figure 1, les tiroirs étant repoussés vers la droite par un organe de rappel élastique 50, contre l'action, en sens opposé, d'une pression de commande appliquée, du côté droit, sur une entrée de pilotage 54 alimentée par un circuit 53 branché en dérivation sur la conduite principale 1. Cette pression de commande est générée au moyen d'une électrovanne de pilotage 7 qui forme un diviseur de pression variable avec un orifice calibré O₅ disposé en amont. De préférence, le circuit 53 comporte un accumulateur 56 destiné à filtrer les oscillations de pression éventuelles.

Une contre-pression est appliquée, dans le sens opposé, sur une entrée 55 disposée du côté gauche sur la figure 1, et reliée en dérivation à un premier circuit de lubrification 6 branché sur une première sortie 52 de la vanne de lubrification 5.

Dans la position centrale d'équilibre des tiroirs, pour laquelle la pression de commande, réglée par l'électrovanne 7, est équilibrée par l'action de l'organe de rappel élastique 50 et de la contre pression appliquée sur l'entrée 55, seul le premier circuit 6 est alimenté par la sortie 52.

Tout le débit passant par la conduite secondaire 3 et réglé par l'orifice calibré O₄ passe alors par cette sortie prioritaire 52. Cependant, seule une partie de ce débit est évacuée par le premier circuit 6, une autre partie étant refroidie dans un échangeur de chaleur 62 alimenté en dérivation par une conduite 61 qui rejoint le second circuit de lubrification 6' branché sur la seconde sortie 52' de la vanne de régulation 5. Des orifices calibrés O'6 et 07 placés respectivement sur le premier circuit 6 et la conduite 61, en amont de l'échangeur 62, permettent de régler le partage des débits.

En fonction du courant de commande de l'électrovanne de pilotage 7, le tiroir de la vanne de régulation 5 peut donc se déplacer entre deux positions extrêmes, respectivement de fermeture complète et d'ouverture complète des deux sorties 52, 52', en passant par la position centrale pour laquelle seule la première sortie 52 est ouverte, l'entrée 51' restant fermée.

En outre, dans la position de fermeture de la vanne 5 la conduite secondaire 6' est mise en communication avec le réservoir pour le retour d'huile vers celui-ci.

En aval du circuit de commande 53 de la vanne de lubrification 5, la conduite principale 1 alimente, dans le cas représenté sur la figure 1, deux circuits 11, 11' d'actionnement des deux embrayages. Deux électrovannes de commande 8, 8' montées, respectivement, sur les circuits 11, 11' permettent de réguler en fonction de leur courant de commande, les pressions dans les chambres d'actionnement de chacun des embrayages.

Un tel système hydraulique est particulièrement simple puisqu'il ne comporte que deux vannes à tiroirs de régulation 2, 5 commandées directement à partir de la pression de ligne par les deux électrovannes de pilotage 4, 7, et présente de multiples avantages.

La vanne de régulation de pression 2, branchée en dérivation sur la conduite principale 1 permet, en fonction du courant de commande appliqué sur l'électrovanne de pilotage 4, d'alimenter en priorité le ou les circuit(s) de lubrification, par la conduite secondaire 3, le surplus d'huile éventuel retournant à l'aspiration pompe par la conduite 23.

La vanne de lubrification 5 permet, en fonction du courant de commande appliqué sur l'électrovanne de pilotage 7, de couper complètement le débit de lubrification, dans la position de droite des tiroirs sur la figure 1, d'ouvrir progressivement la première sortie 52 dans la position centrale, afin de réguler finement la pression dans les circuits 6 et 61 et donc le débit dans l'échangeur 62 et le circuit 6, ou encore d'assurer l'alimentation maximale de la lubrification de l'embrayage en ouvrant les deux circuits 6, 6' dans la position de gauche.

L'orifice calibré O₄ disposé sur la conduite 3 d'alimentation de la vanne de lubrification 5, en aval de la vanne 2 de régulation de la pression de ligne assure, en cas de pression de ligne élevée et de fort débit de lubrification, que la pression amont de la vanne de lubrification 5 ne soit pas trop élevée, ce qui permet d'éviter une hausse trop importante de la pression de contre réaction appliquée sur l'entrée 55 de la vanne 5 qui empêcherait la complète commutation des tiroirs, par exemple dans le cas où l'électrovanne de pilotage 7 ne permettrait pas de générer une pression de pilotage suffisante de la vanne 5 malgré la commande de courant adéquate.

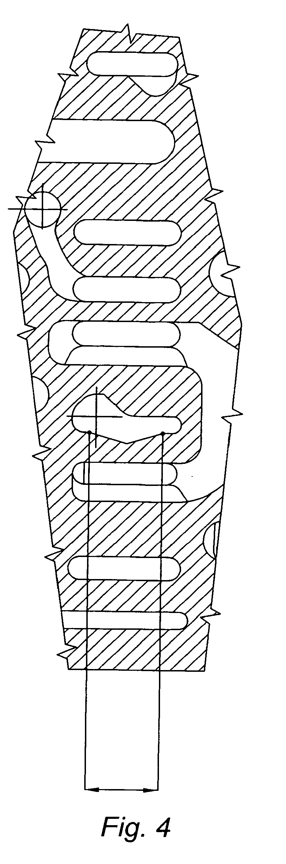

II est à noter que la présence d'un cran en V sur la première entrée 51 de la vanne de lubrification 5, de la façon représentée sur la figure 4, permet éventuellement d'éviter l'utilisation d'un accumulateur 56 en garantissant une section de découvrement plus progressive des tiroirs, ce qui stabilise le système.

Dans un tel système, l'actionnement des embrayages est hydrauliquement prioritaire sur l'alimentation de la lubrification. En effet, en cas d'insuffisance de débit de la pompe 10, le débit disponible est prioritairement utilisé pour alimenter les chambres d'actionnement d'embrayage par les circuits 11, 11' en y maintenant la pression nécessaire, le cas échéant au détriment de la lubrification dont l'alimentation, par les circuits 6, 6' peut être ponctuellement atténuée lors d'un appel de débit du côté actionnement, les dispositifs de pilotage 4, 7 des deux vannes à tiroirs 2, 5 étant alimentés directement par la pression de ligne dans la conduite principale 1 d'alimentation des circuits d'actionnement 11, 11'.

L'utilisation d'une vanne de lubrification 5 comportant deux sorties 52, 52' est particulièrement avantageuse. La première sortie 52 peut, en effet, alimenter les petits débits de lubrification pour les usages courant de la boîte de vitesses, tels que roulage normal, glissement piloté, passage de vitesses peu dissipatifs en énergie. Le débit de cette première sortie 52 est dirigé en partie, vers l'échangeur 62 pour le refroidissement de l'huile et peut être finement régulé en fonction de la position de la vanne 5. Dans les phases très dissipatives en énergie nécessitant un débit beaucoup plus important, cette première sortie 52 est complètement ouverte et la seconde 52' s'ouvre également. Le débit de lubrification est alors la somme des deux débits dans les conduites 6 et 6'. Cependant, seul le débit de la première sortie 52 est finement régulé car c'est sur celui-ci qu'est connectée la contre réaction de la vanne appliquée sur son entrée 55. L'ouverture de la seconde sortie 52' peut être commandée progressivement, en boucle ouverte, par une modulation de la pression de pilotage dans une plage de variation telle que la première sortie 52 soit parfaitement ouverte.

De plus, les équilibres des tiroirs des vannes 2 et 5 et le choix des électrovannes de pilotage 4 et 7 peuvent être tel que le système délivre la pression de ligne maximale et le débit de lubrification maximal en l'absence d'alimentation électrique des électrovannes 4 et 7. En outre, le débit de graissage et de lubrification du double embrayage peut être complètement coupé en cas de besoin, notamment aux basses températures.

Par exemple, dans le mode de réalisation de la figure 1, les électrovannes 4 et 7 sont du type ouvert au repos, la pression de pilotage délivrée à l'entrée de la vanne de régulation correspondante étant, alors, minimale.

Ainsi, lorsque l'électrovanne 7 est ouverte, la pression de pilotage délivrée à l'entrée 54 de la vanne 5 est très faible et le tiroir bascule complètement en découvrant la sortie 52' qui alimente le second circuit de lubrification 6' par un débit qui s'ajoute à celui transitant par l'échangeur 62.

A titre d'exemple, la figure 2 montre, en ordonnée, la variation du débit de lubrification dans le circuit 6' en fonction du courant de commande de l'électrovanne 7 indiqué en abscisse et pour différents niveaux de pression de ligne, respectivement 1 bar (courbe A₁), 5 bars (A₂), 15 bars (A₃) et 20 bars (A₄). On voit que, pour une pression de ligne déterminée, le débit est maintenu à une valeur constante par la vanne de régulation 5 jusqu'à une valeur de consigne (C₁, C₂, ......) du courant de commande de l'électrovanne 9 pour laquelle le débit chute brutalement puis descend progressivement jusqu'à la fermeture complète de la vanne qui se produit pour une même valeur C₀ du courant de consigne, indépendant de la pression de ligne.

Bien entendu, l'invention ne se limite pas au seul mode de réalisation qui vient d'être décrit à titre d'exemple mais qui pourrait faire l'objet de variantes restant dans le même cadre de protection.

Comme on l'a déjà indiqué, l'accumulateur 56 placé sur le circuit de commande 53 de la vanne de lubrification 5 pourrait être supprimé si la vanne comporte un cran en V garantissant une variation plus progressive de la section de découvrement des tiroirs en fonction du déplacement axial.

La séparation entre le débit de graissage sous pression des éléments de la boîte de vitesses, alimenté par la conduite 6, et le débit de lubrification du double embrayage transitant par l'échangeur 62 pourrait être réalisée en aval de l'échangeur.

D'autre part, la calibration de l'orifice O₄ est destinée à faire chuter la pression d'alimentation de la vanne de graissage en cas de pression de ligne et de demande de débit de lubrification trop élevées pour garantir le basculement complet de la vanne dans cette situation. Il est possible que les tiroirs ne basculent pas complètement mais que le débit de lubrification reste, dans tous les cas suffisant. Le basculement complet des tiroirs peut être garanti pour toutes les valeurs utiles de la pression de ligne pilotée, sans avoir lieu, cependant, en cas d'absence de pilotage de la pression de ligne qui est alors à une valeur incidentelle. La valeur de la pression de ligne à partir de laquelle le basculement complet de la vanne 5 et l'ouverture de la voie 52' ne sont plus assurés devra être suffisamment élevée pour engendrer un débit suffisant par la seule voie 52.

## Revendications

1. Système d'alimentation en fluide d'au moins un mécanisme à commande hydraulique, comportant une conduite principale (1) alimentée sous une pression de ligne par au moins une pompe (10), une première vanne (2) de régulation de la pression de ligne, ayant au moins une entrée (21) branchée en dérivation sur la conduite principale (1) et au moins une sortie (22) débouchant sur une conduite secondaire (3) de lubrification, un premier moyen de pilotage (4), alimenté en fluide à partir de la conduite principale et générant une pression réglable de commande de la première vanne (2) de régulation de pression, au moins une seconde vanne (5) de régulation d'un débit de lubrification, ayant au moins une entrée (51) branchée sur ladite conduite secondaire (3) et au moins une sortie (52) débouchant sur au moins un circuit (6) de lubrification du mécanisme, un second moyen de pilotage (7), alimenté en fluide à partir de la conduite principale (1) et générant une pression réglable de commande de la seconde vanne (5) de régulation de lubrification, et au moins un circuit (11) d'actionnement du mécanisme alimenté en fluide à partir de la conduite principale (1), par l'intermédiaire d'un moyen réglable (8) de commande du mécanisme,
**caractérisé par le fait que** la seconde vanne (5) de régulation du débit de lubrification est une vanne à tiroirs dont la position est réglée en fonction d'une pression de commande délivrée par le second moyen de pilotage (7), entre une position de fermeture complète du circuit de lubrification (6) et une position d'ouverture complète de la vanne (5) avec un débit maximal de lubrification.

2. Système d'alimentation selon la revendication 1, **caractérisé par le fait que** chaque moyen de pilotage (4, 7) est une électrovanne formant un diviseur de pression variable avec une entrée d'alimentation branchée sur la conduite principale par l'intermédiaire d'un orifice calibré (O₂, O₅).

3. Système d'alimentation selon l'une des revendications 1 et 2, **caractérisé par le fait que** la première vanne (2) de régulation de la pression de ligne est une vanne à tiroirs dont la position est réglée par le premier moyen de pilotage (4), entre une position de fermeture complète avec une pression de ligne maximale dans la conduite principale, et une position d'ouverture complète de la vanne en cas de surpression, avec renvoi de surplus de fluide en amont de la pompe (10).

4. Système d'alimentation selon la revendication 3, **caractérisé par le fait que** la première vanne (2) de régulation de la pression de ligne comporte deux sorties, respectivement une sortie prioritaire (22) reliée à au moins une entrée (51) de la seconde vanne de lubrification (5) par une conduite secondaire (3) d'alimentation du circuit de lubrification (6) et une seconde sortie (22') débouchant dans une conduite (23) de retour au réservoir.

5. Système d'alimentation selon la revendication 4, **caractérisé par le fait que** la première vanne (2) de régulation de pression est une vanne à tiroirs dont la position est réglée, en fonction d'une pression de commande délivrée par le premier moyen de pilotage (4), entre deux positions, respectivement de fermeture complète et d'ouverture complète des deux sorties (22, 22'), en passant par une position centrale d'ouverture de la première sortie prioritaire (22) reliée à la vanne de lubrification (5), avec fermeture de la seconde sortie (22') de retour au réservoir.

6. Système d'alimentation selon l'une des revendications précédentes, **caractérisé par le fait que** la seconde vanne de lubrification (5) comporte des première (52) et deuxième (52') sorties débouchant chacune dans un circuit de lubrification du mécanisme, respectivement un premier circuit (6, 61) qui est alimenté progressivement par la première sortie (52) par déplacement de la vanne (5) entre une position extrême de fermeture complète et une position centrale, et un second circuit (6') qui est alimenté progressivement par la deuxième sortie (52') par déplacement de la vanne (5) entre ladite position centrale et une position extrême d'ouverture complète.

7. Système d'alimentation selon l'une des revendication précédentes, **caractérisé par le fait qu'**il comporte un moyen (62) de refroidissement d'au moins une partie du fluide de lubrification.

8. Système d'alimentation selon la revendication 8, **caractérisé par le fait que** le moyen de refroidissement est un échangeur de chaleur (62) branché en dérivation sur au moins un circuit de lubrification (6).

9. Système d'alimentation selon la revendication 8, **caractérisé en ce que** l'échangeur de chaleur (62) comporte une entrée du fluide branchée en dérivation sur un premier circuit de lubrification (6) et une sortie reliée à un second circuit (6') pour l'alimentation de ce dernier en fluide refroidi.

10. Système d'alimentation selon l'une des revendications 7 et 9, **caractérisé par le fait que** ladite première sortie (52) alimente les petits débits de lubrification du mécanisme, pour les usages courants du mécanisme, avec un débit finement régulé autour de la position centrale de la vanne de lubrification (5), et que la deuxième sortie (52') alimente à plein débit dans les phases de fonctionnement très dissipatives en énergie.

11. Système d'alimentation selon l'une des revendications précédentes, **caractérisé par le fait que** chaque moyen de pilotage (4, 7) de l'une desdites première (2) et seconde (5) vannes de régulation comporte un circuit de pilotage (31, 53) relié à une entrée (25, 54) de pilotage de la vanne correspondante (2, 5) et branché en dérivation sur la conduite principale d'alimentation (1) en passant par un orifice calibré (O₂, O₅), et une électrovanne (4, 7) branchée en dérivation sur ledit circuit de pilotage (31, 53) pour le réglage d'une pression de commande appliquée sur l'entrée de pilotage (25, 54) de la vanne (2, 5) en fonction d'un signal électrique de consigne appliquée sur l'électrovanne (4, 7).

## Claims

1. System for feeding with fluid at least one hydraulic control mechanism, comprising a main pipe (1) fed at a line pressure by at least one pump (10), a first line pressure regulating valve (2), having at least one inlet (21) connected in parallel to the main pipe (1) and at least one outlet (22) connecting to a secondary lubrication pipe (3), a first control means (4), fed with fluid from the main pipe and generating an adjustable pressure for controlling the first pressure regulating valve (2), at least one second valve (5) for regulating a lubrication flow rate, having at least one inlet (51) connected to the said secondary pipe (3) and at least one outlet (52) connecting to at least one circuit (6) for lubricating the mechanism, a second control means (7), fed with fluid from the main pipe (1) and generating an adjustable pressure for controlling the second lubrication regulating valve (5), and at least one circuit (11) for actuating the mechanism fed with fluid from the main pipe (1), via an adjustable means (8) for controlling the mechanism, **characterized in that** the second valve (5) for regulating the lubrication flow rate is a slide valve of which the position is adjusted according to a control pressure supplied by the second control means (7), between a fully closed position of the lubrication circuit (6) and a fully open position of the valve (5) with a maximum lubrication flow rate.

2. Feed system according to Claim 1, **characterized in that** each control means (4, 7) is a solenoid valve forming a variable pressure distributor with a feed inlet connected to the main pipe via a calibrated hole (O₂, O₅).

3. Feed system according to either of Claims 1 and 2, **characterized in that** the first line pressure regulating valve (2) is a slide valve of which the position is adjusted by the first control means (4), between a fully closed position with a maximum line pressure in the main pipe, and a fully open position of the valve if the pressure is too high, with surplus fluid return upstream of the pump (10).

4. Feed system according to Claim 3, **characterized in that** the first line pressure regulating valve (2) comprises two outlets, respectively a priority outlet (22) connected to at least one inlet (51) of the second lubrication valve (5) by a secondary pipe (3) for feeding the lubrication circuit (6) and a second outlet (22') connecting to a return pipe (23) to the reservoir.

5. Feed system according to Claim 4, **characterized in that** the first pressure regulating valve (2) is a slide valve of which the position is adjusted, according to a control pressure supplied by the first control means (4), between two positions, respectively fully closed and fully open, of the two outlets (22, 22'), via a middle open position of the first priority outlet (22) connected to the lubrication valve (5), with the second return outlet (22') to the reservoir being closed.

6. Feed system according to one of the preceding claims, **characterized in that** the second lubrication valve (5) comprises first (52) and second (52') outlets each connecting to a circuit for lubricating the mechanism, respectively a first circuit (6, 61) which is fed progressively via the first outlet (52) by movement of the valve (5) between a maximum fully closed position and a middle position, and a second circuit (6') which is fed progressively via the second outlet (52') by movement of the valve (5) between the said middle position and a maximum fully open position.

7. Feed system according to one of the preceding claims, **characterized in that** it comprises a means (62) of cooling at least one portion of the lubricating fluid.

8. Feed system according to Claim 8, **characterized in that** the means of cooling is a heat exchanger (62) connected in parallel to at least one lubrication circuit (6).

9. Feed system according to Claim 8, **characterized in that** the heat exchanger (62) comprises a fluid inlet connected in parallel to a first lubrication circuit (6) and an outlet connected to a second circuit (6') for feeding the latter with cooled fluid.

10. Feed system according to either of Claims 7 and 9, **characterized in that** the said first outlet (52) delivers the low outputs for lubricating the mechanism, for the normal applications of the mechanism, with a finely regulated flow rate around the middle position of the lubrication valve (5), and **in that** the second outlet (52') delivers at full output during the high energy-dissipating operating phases.

11. Feed system according to one of the preceding claims, **characterized in that** each control means (4, 7) of one of the said first (2) and second (5) regulating valves comprises a control circuit (31, 53) connected to a control inlet (25, 54) of the corresponding valve (2, 5) and connected in parallel to the main feed pipe (1) via a calibrated hole (O₂, O₅), and a solenoid valve (4, 7) connected in parallel to the said control circuit (31, 53) to adjust a control pressure applied to the control inlet (25, 54) of the valve (2, 5) according to a preset electrical signal applied to the solenoid valve (4, 7).

## Patentansprüche

1. System zum Zuführen eines Fluids für mindestens einen Mechanismus mit hydraulischer Steuerung, umfassend eine Hauptleitung (1), die unter einem Leitungsdruck von mindestens einer Pumpe (10) versorgt wird, ein erstes Ventil (2) zur Regelung des Leitungsdrucks, das mindestens einen Eingang (21), der abzweigend an die Hauptleitung (1) angeschlossen ist, und mindestens einen Ausgang (22) aufweist, der in eine Nebenschmierleitung (3) mündet, ein erstes Steuermittel (4), das mit Fluid von der Hauptleitung versorgt wird und einen einstellbaren Steuerdruck für das erste Druckregelventil (2) erzeugt, mindestens ein zweites Ventil (5) zur Regelung einer Schmiermenge, das mindestens einen Eingang (51), der an die Nebenleitung (3) angeschlossen ist, und mindestens einen Ausgang (52) aufweist, der in mindestens eine Schmierschaltung (6) des Mechanismus mündet, ein zweites Steuermittel (7), das mit Fluid von der Hauptleitung (1) versorgt wird und einen einstellbaren Steuerdruck des zweiten Schmierregelventils (5) erzeugt, und mindestens eine Betätigungsschaltung (11) des von der Hauptleitung (1) mit Fluid versorgten Mechanismus mit Hilfe eines einstellbaren Mittels (8) zur Steuerung des Mechanismus,
**dadurch gekennzeichnet, dass** das zweite Ventil (5) zur Regelung der Schmiermenge ein Ventil mit Schiebern ist, deren Position in Abhängigkeit von einem Steuerdruck, der von dem zweiten Steuermittel (7) geliefert wird, zwischen einer völligen Verschlussposition des Schmiermechanismus (6) und einer völligen Öffnungsposition des Ventils (5) mit einer maximalen Schmiermenge geregelt wird.

2. Zuführsystem nach Anspruch 1, **dadurch gekennzeichnet, dass** jedes Steuermittel (4, 7) ein Magnetventil ist, das einen variablen Druckteiler mit einem Zuführeingang bildet, der an die Hauptleitung mit Hilfe einer geeichten Öffnung (O₂, O₅) angeschlossen ist.

3. Zuführsystem nach einem der Ansprüche 1 und 2, **dadurch gekennzeichnet, dass** das erste Ventil (2) zur Regelung des Leitungsdrucks ein Ventil mit Schiebern ist, deren Position durch das erste Steuermittel (4) zwischen einer völligen Verschlussposition mit einem maximalen Leitungsdruck in der Hauptleitung und einer völligen Öffnungsposition des Ventils im Falle eines Überdrucks mit Rückleitung des Fluidüberschusses stromaufwärts zur Pumpe (10) geregelt wird.

4. Zuführsystem nach Anspruch 3, **dadurch gekennzeichnet, dass** das erste Ventil (2) zur Regelung des Leitungsdrucks zwei Ausgänge umfasst, einen vorrangigen Ausgang (22), der mit mindestens einem Eingang (51) des zweiten Schmierventils (5) durch eine Nebenzuführleitung (3) der Schmierschaltung (6) verbunden ist, und einen zweiten Ausgang (22'), der in eine Rückleitung (23) zum Behälter mündet.

5. Zuführsystem nach Anspruch 4, **dadurch gekennzeichnet, dass** das erste Druckregelventil (2) ein Ventil mit Schiebern ist, deren Position in Abhängigkeit von einem vom ersten Steuermittel (4) gelieferten Steuerdruck zwischen zwei Positionen geregelt wird, eine Position des völligen Verschlusses bzw. der völligen Öffnung der beiden Ausgänge (22, 22'), wobei eine Mittelposition der Öffnung des ersten prioritären Ausgangs (22), der mit dem Schmierventil (5) verbunden ist, bei Verschluss des zweiten Ausgangs (22') zur Rückleitung an den Behälter passiert wird.

6. Zuführsystem nach einem der vorhergehenden Ansprüche, **dadurch gekennzeichnet, dass** das zweite Schmierventil (5) erste (52) und zweite Ausgänge (52') umfasst, die jeweils in eine Schmierschaltung des Mechanismus münden, in eine erste Schaltung (6, 61), die nach und nach vom ersten Ausgang (52) durch Verschieben des Ventils (5) zwischen einer äußersten Position des völligen Verschlusses und einer Mittelposition versorgt wird, und in eine zweite Schaltung (6'), die nach und nach vom zweiten Ausgang (52') durch Verschieben des Ventils (5) zwischen der Mittelposition und einer äußersten Position der völligen Öffnung versorgt wird.

7. Zuführsystem nach einem der vorhergehenden Ansprüche, **dadurch gekennzeichnet, dass** es ein Mittel (62) zum Kühlen mindestens eines Teils des Schmierfluids umfasst.

8. Zuführsystem nach Anspruch 8, **dadurch gekennzeichnet, dass** das Kühlmittel ein Wärmetauscher (62) ist, der abzweigend an mindestens eine Schmierschaltung (6) angeschlossen ist.

9. Zuführsystem nach Anspruch 8, **dadurch gekennzeichnet, dass** der Wärmetauscher (62) einen Fluideingang, der abzweigend an eine erste Schmierschaltung (6) angeschlossen ist, und einen Ausgang umfasst, der an eine zweite Schaltung (6') zur Versorgung dieser letztgenannten mit gekühltem Fluid angeschlossen ist.

10. Zuführsystem nach einem der Ansprüche 7 und 9, **dadurch gekennzeichnet, dass** der erste Ausgang (52) die kleinen Schmiermengen des Mechanismus für die laufenden Nutzungen des Mechanismus mit einer fein um die Mittelposition des Schmierventils (5) geregelten Menge zuführt, und dass der zweite Ausgang (52') die volle Menge in den stark Wärme ableitenden Betriebsphasen zuführt.

11. Zuführsystem nach einem der vorhergehenden Ansprüche, **dadurch gekennzeichnet, dass** jedes Steuermittel (4, 7) eines der ersten (2) und zweiten (5) Regelventile eine Steuerschaltung (31, 53), die mit einem Steuereingang (25, 54) des entsprechenden Ventils (2, 5) verbunden und abzweigend an die Hauptzuführleitung (1) angeschlossen ist, wobei sie eine geeichte Öffnung (O₂, O₅) passiert, und ein Magnetventil (4, 7) umfasst, das abzweigend an die Steuerschaltung (31, 53) zur Regelung eines Steuerdrucks angeschlossen ist, der an den Steuereingang (25, 54) des Ventils (2, 5) in Abhängigkeit von einem elektrischen Sollsignal angelegt wird, das an das Magnetventil (4, 7) angelegt wird.
